# EUROPEAN PATENT APPLICATION

(11) **EP 0 805 004 A1**
(43) Date of publication of application: **05.11.1997**
(21) Application number: 96937557.5
(22) Date of filing: 11.11.1996
(51) Int. Cl.: B25J 17/02

(54) **WRIST MECHANISM FOR ARTICULATED ROBOT**

(30) Priority: 17.11.1995 JP 323781/95
(71) Applicant: KABUSHIKI KAISHA YASKAWA DENKI, Kitakyushu-Shi Fukuoka 806 (JP)
(72) Inventor: ICHIBANGASE, Atsushi c/o K.K. Yaskawa Denki, Kitakyushu-shi Fukuoka 806 (JP)
(74) Representative: Grünecker, Kinkeldey, Stockmair & Schwanhäusser Anwaltssozietät
(86) International application number: JP9603311
(87) International publication number: WO9718928

(57) **Abstract**

In the invention, there are provided an inclined arm (101) which is disposed on a leading end of an arm (1) and is inclined with respect to the longitudinal direction of the arm (1), and a housing (102) which includes on the side surface of its side facing to a rotary axis (R) a mounting seat (103) extending in parallel to the rotary axis (R) and is fixed to the leading end of the inclined arm (101), a drive part for driving a wrist part (2) is comprised of a drive motor (5) fixed to the interior portion of the inclined arm (101) along the inclined direction thereof and a reduction gear (4) mounted on the mounting seat (103) of the housing (102), and an output shaft (51) of the drive motor (5) is connected to an input shaft (42) of the reduction gear (4) by means of meshing engagement between two bevel gears (52, 43). The invention provides a wrist mechanism of an articulated robot which prevents the wrist part from being offset, is high in rigidity, and is simple in structure.

## Description

### Technical Field

The present invention relates to a wrist mechanism provided in the leading end portion of an arm of an articulated robot.

### Background Art

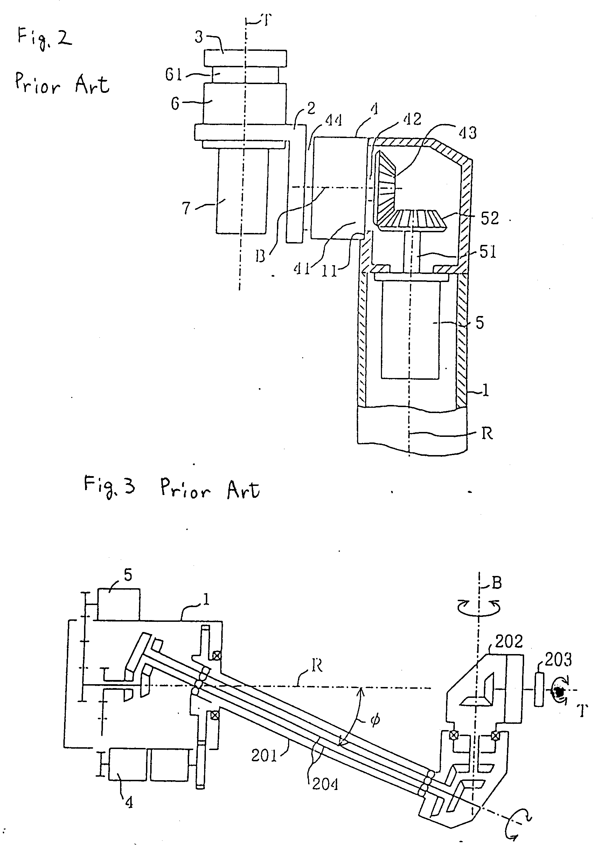

In an arm of a conventional articulated robot, for example, as shown in Fig. 2 as a first conventional example, there is provided a hollow arm 1 including on the leading end side thereof a wrist part 2 which can be rotated about a rotary axis B extending at right angles to a rotary axis R extending in the longitudinal direction of the arm 1, while the wrist part 2 includes a support member 3 which supports an end effector and is rotatable about a rotary axis T extending at right angles to the rotary axis B.

On the side surface of the leading end side of the arm 1, there is provided a mounting seat 11 onto which a fixed part 41 of a reduction gear 4 is to be mounted, and an input shaft 42 of the reduction gear 4 is projected into the arm 1. A drive motor 5 is fixed to the interior portion of the arm 1 in such a manner that it extends in parallel to the longitudinal direction of the arm 1, an output shaft 51 is disposed in parallel with the rotary axis R, and the input shaft 42 of the reduction gear 4 is connected through bevel gears 43 and 52 to the output shaft 51 of the drive motor 5 extending at right angles to the input shaft 42, so that power can be transmitted between them. An output shaft 44 of the reduction gear 4 is projected outwardly of the arm 1, while the wrist part 2 is fixed onto the output shaft 44. To the wrist part 2, there is fixed a reduction gear 6 including an output shaft 61 extending along the rotary axis T which is offset from the rotary axis R and lies at right angles to the rotary axis B. The support member 3 for fixing an end effector or the like is supported on the output shaft 61, and a drive motor 7 is connected to the reduction gear 6. (see, for example, Japanese Utility Model Unexamined Publication Nos. Hei.1-129090 and Hei 2-107481).

Also, for example, as a second conventional arm, as shown in Fig. 3, there is disclosed an arm of an articulated robot which comprises an arm 1, a first wrist part 201 rotatable around a rotary axis R extending in the longitudinal direction of the arm 1 while maintaining a given angle φ with respect to the rotary axis R, a second wrist part 202 supported on the leading end portion of the first wrist part 201 and rotatable about a rotary axis B extending at right angles to the rotary axis R, and a support member 203 rotatable about a rotary axis T extending at right angles to the rotary axis B (for example, Japanese Patent Unexamined Publication No. Sho. 62-54692).

In this structure, two drive motors 4 and 5, which are respectively used to drive the second wrist part 202 and support member 203, are mounted on the arm 1, so that the second wrist part 202 and support member 203 can be driven by the motors 4 and 5 through double shafts 204 which are respectively disposed within the first wrist part 201.

However, in the former conventional structure, since the wrist part 2 is offset with respect to the rotary axis R, an arithmetic operation for control of the posture of the support member 3 fixed to the wrist part 2 is complicated, which increases the cost of a control device.

On the other hand, in the latter conventional structure, due to the fact that the motors 4 and 5 respectively for driving the second wrist part 202 and support member 3 are mounted on the arm 1 and the double shafts 204 for transmitting the power from the drive motors 4 and 5 to the second wrist part 202 and support member 3 are inserted through the first wrist part 201, the lengths of the double shafts 204 are long, resulting in the complicated structure. Due to this, the strength of the structure can be lowered and vibrations can occur.

### DISCLOSURE OF THE INVENTION

In view of the above drawbacks found in the conventional structures, it is an object of the invention to provide a wrist mechanism of an articulated robot which prevents a wrist part thereof from being offset, is high in rigidity, and is simple in structure.

In attaining the above object, according to the invention, there is provided a wrist mechanism of an articulated robot comprising an inclinable arm, a wrist part disposed at the leading end side of the arm in such a manner that it can be rotated about a rotary axis B extending at right angles to a rotary axis R extending in the longitudinal direction of the arm, and a support member disposed in the wrist part in such a manner that it can be rotated about a rotary axis T extending at right angles to the rotary axis B, and further comprising a drive part fixed to the wrist part for driving the support member, and another drive part mounted on the arm for driving the wrist part, characterized in that the wrist mechanism further includes an inclined arm disposed in the leading end portion of the arm so as to be inclined with respect to the longitudinal direction of the arm, and a housing fixed to the leading end of the inclined arm and including, on the side face of the side thereof facing the rotary axis R, a mounting seat extending in parallel to the rotary axis R, the drive part for driving the wrist part is comprised of a drive motor fixed to the inside of the inclined arm so as to extend along the inclined direction of the inclined arm and a reduction gear mounted on the mounting seat of the housing, and an output shaft of the drive motor is connected to an input shaft of the reduction gear by means of meshing engagement between two bevel gears.

### BRIEF DESCRIPTION OF THE DRAWINGS

Fig. 1 is a side sectional view of an embodiment of a wrist mechanism of an articulated robot according to the invention,
Fig. 2 is a side sectional view of a first conventional wrist mechanism, and
Fig. 3 is a structural view of a second conventional wrist mechanism.

### BEST MODE FOR PRACTICING THE INVENTION

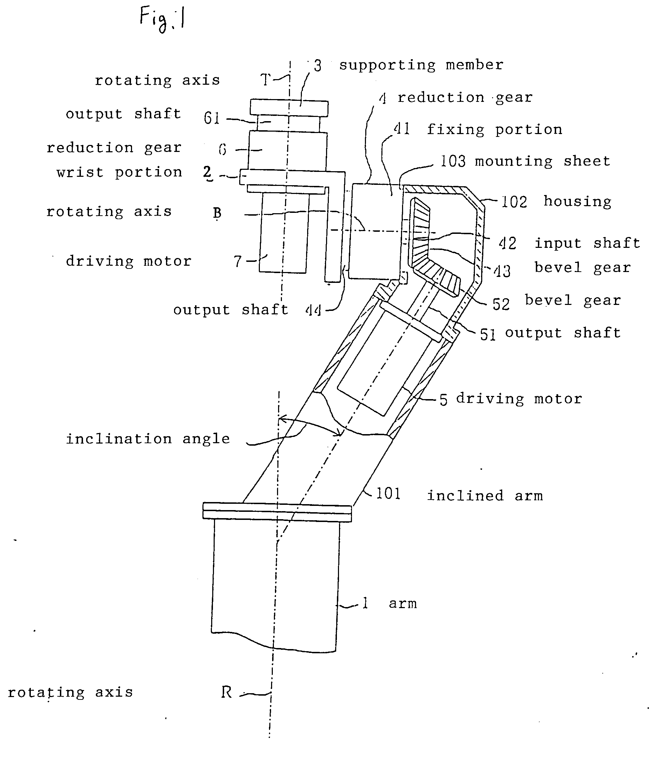

The invention will now be described with respect to an embodiment shown in the drawing. Fig. 1 is a side sectional view showing the embodiment of the invention.

In Fig. 1, reference numeral 1 designates an arm having a hollow inclined arm 101 fixed to the leading end side thereof, while the inclined arm 101 extends in a direction inclined at an acute inclination angle θ with respect to a rotary axis R extending in the longitudinal direction of the arm 1. A drive motor 5 is fixed to the interior portion of the leading end portion of the inclined arm 101, an output shaft 51 of the drive motor 5 is disposed so as to extend in the longitudinal direction of the inclined arm 101, and a bevel gear 52 is fixed to the output shaft 51. A hollow housing 102 is mounted on the leading end of the inclined arm 101. On the side surface of the housing 102 that faces the rotary axis R, there is provided a mounting seat 103 to which a fixed portion 41 of a reduction gear 4 is fixed. An input shaft 42 of the reduction gear 4 is projected into the housing 102, and a bevel gear 43 is fixed to the input shaft 42 in such a manner that it can mesh with the bevel gear 52. An output shaft 44 of the reduction gear 4 is projected outside of the housing 102, and a wrist part 2 is fixed to the output shaft 44 of the reduction gear 4 in such a manner that it can be rotated about a rotary axis B extending at right angles to the rotary axis R.

To the wrist part 2, there is fixed a reduction gear 6 which not only can be positioned coaxially with the rotary axis R when a support member 3 faces ahead but also can be rotated about a rotary axis T intersecting at right angles to the rotary axis B. The support member 3 for supporting an end effector is fixed to an output shaft 61 of the reduction gear 6, and the reduction gear 6 can be driven by a drive motor 7.

According to the above-mentioned structure, the inclined arm 101 is inclinedly fixed to the leading end of the arm 1, the wrist part 2 is disposed in a direction to face the rotary axis R extending in the longitudinal direction of the arm 1, and, when the support member 3 faces ahead, the wrist part 2 can be positioned on the rotary axis R. Thus, the wrist part 2 can be arranged such that it is prevented from being offset with respect to the rotary axis R.

Further, the inclined arm 101 is fixed to the arm 1, the drive motor for driving the wrist part 2 is fixed to the leading end of the inclined arm 101, and the drive motor 5 for driving the support member 3 is directly fixed to the wrist part 2. Due to this, the distance between the drive motors and the parts to be driven by the drive motors can be set short, and there is eliminated the need for provision of a long shaft which can generate vibrations, so that the structure of the present wrist mechanism can be simplified.

As has been described heretofore, according to the invention, since not only the wrist part is arranged such that it is prevented from being offset with respect to the longitudinal direction of the arm but also the distance between the drive motors and the parts to be driven such as the wrist part, support member and the like are set short, the posture of the end effector to be fixed to the support member can be controlled easily as well as the structure of the present wrist mechanism can be made high in rigidity and can be simplified.

### Possibility of the Industrial Application

The present invention is useful for an industrial robot and, especially, for a wrist mechanism of an articulated robot.

## Claims

1. A wrist mechanism of an articulated robot comprising an inclinable arm, a wrist part disposed at a leading end side of the arm in such a manner as to be able to rotate about a rotary axis B extending at right angles to a rotary axis R extending in a longitudinal direction of the arm, and a support member disposed in the wrist part in such a manner as to be able to rotate about a rotary axis T extending at right angles to the rotary axis B, and further comprising a drive part fixed to the wrist part for driving the support member, and another drive part mounted to the arm for driving the wrist part, characterized in that
said wrist mechanism further includes an inclined arm disposed on a leading end portion of said arm so as to be inclined with respect to the longitudinal direction of said arm, and a housing fixed to a leading end of said inclined arm and including, on a side surface of a facing side thereof to the rotary axis R, a mounting seat extending in parallel to the rotary axis R;
said drive part for driving said wrist part comprises a drive motor fixed to an inside of said inclined arm so as to extend along an inclined direction of said inclined arm and a reduction gear mounted on said mounting seat of said housing; and
an output shaft of said drive motor is connected to an input shaft of said reduction gear by means of meshing engagement between two bevel gears.
